# EUROPEAN PATENT SPECIFICATION

(11) **EP 3 315 389 B1**
(45) Date of publication and mention of the grant of the patent: **10.11.2021**
(21) Application number: 16818179.0
(22) Date of filing: 27.06.2016
(51) Int. Cl.: B32B 5/06, B62D 25/20, B32B 3/26, B32B 5/08, B29C 43/18, B60R 13/08, B32B 5/02, B32B 7/12, B32B 15/04, B32B 15/08, B32B 15/14, B32B 15/20, B32B 27/08, B32B 27/12, B32B 27/30, B32B 27/32, B32B 27/34, B32B 27/36, B32B 27/40, B32B 5/26, B29L 31/30

(54) **VEHICLE UNDERBODY COVER AND METHOD FOR MANUFACTURING SAME**
FAHRZEUGUNTERBODENABDECKUNG UND VERFAHREN ZUR HERSTELLUNG DAVON
REVÊTEMENT DE DESSOUS DE CAISSE DE VÉHICULE ET PROCÉDÉ POUR SA FABRICATION

(30) Priority: 29.06.2015 KR 20150091973
(43) Date of publication of application: 02.05.2018
(73) Proprietor: LG Hausys, Ltd., Seoul 07326 (KR); ENVIONEER Co., Ltd., Bundang-gu, Seongnam-Si Gyeonggi-do (KR)
(72) Inventor: AHN, Seung-Hyun, Seoul 06714 (KR); HAN, Kyung-Seok, Anyang-si Gyeonggi-do 14120 (KR); JUNG, Seong-Moon, Daejeon 34118 (KR)
(74) Representative: Gill Jennings & Every LLP
(86) International application number: PCT/KR2016/006850
(87) International publication number: WO 2017/003146

(56) References cited:
- EP-A1- 2 314 642
- CN-A- 102 341 296
- JP-A- 2009 029 066
- JP-A- 2011 102 453
- JP-A- 2011 102 453
- JP-A- 2013 001 764
- KR-A- 20070 114 042
- KR-A- 20130 137 811

## Description

### [Technical Field]

The present disclosure relates to a vehicle underbody cover and a method for manufacturing the same.

### [Background Art]

A vehicle underbody cover has effects of protecting a car body from external impacts, attenuating noise, smoothly flowing air during driving, and improving fuel efficiency. Due to the above-described reason, the vehicle underbody cover has good effects on characteristics that are priority in the vehicle recently such as high fuel consumption and quietness, its use is expanding not only in commercial vehicles but also in passenger vehicles. The vehicle underbody cover in an early stage was made of steel for the primary purpose of protecting the car body, but was gradually replaced with thermoplastic articles due to disadvantages such as corrosion and heavy weight. However, since the thermoplastic exhibits very low physical properties compared to strength required in a general vehicle underbody cover, a composite material in which a reinforcing fiber such as glass fiber, or the like, is blended with a thermoplastic resin has been used in recent years. Meanwhile, since the reinforcing fiber composite material is made of a high-density material having no porosity, there are disadvantages in that it has a relatively high weight and impact sound is not effectively blocked from the ground such as sand, gravel, or the like.

The method for manufacturing the reinforcing fiber composite material according to the related art is mainly performed by mixing the reinforcing fiber with a thermoplastic resin, followed by molding through extrusion or a mold pressing process. Recently, to improve strength and productivity, a mat-shaped material including the reinforcing fiber is preferentially manufactured by applying a dry needle punching process or a wet-laid process, and then a resin is impregnated into the mat, thereby manufacturing the composite material.

EP2314642 A1 discusses a prepreg, preform, molded product, and method for manufacturing prepreg; JP 2011/102453 A discusses a nonwoven fabric for reinforcing frp.

### [Disclosure]

### [Technical Problem]

It is an aspect of the present disclosure to provide a vehicle underbody cover capable of realizing mechanical strength and light weight.

It is another aspect of the present disclosure to provide a method for manufacturing the vehicle underbody cover.

### [Technical Solution]

In accordance with one aspect of the present disclosure, a vehicle underbody cover includes:
a central layer; and coating layers arranged on both surfaces of the central layer,
wherein the central layer includes: a first fibrous particle; a second fibrous particle; and a binding material for binding the first fibrous particle and the second fibrous particle,
the first fibrous particle and the second fibrous particle are bound by the binding material so as to form an irregular network structure including pores,
the first fibrous particle is an inorganic fiber or an organic fiber,
the second fibrous particle includes a first thermoplastic resin,
the binding material includes a second thermoplastic resin, and
a melting point of the first thermoplastic resin is higher than a melting point of the second thermoplastic resin;
wherein in the preformed board, a weight ratio of a content of the first fibrous particle to the sum of contents of the second fibrous particle and the binding material is from 20 : 80 to 60 : 40; and
wherein the first thermoplastic resin has a specific gravity of more than 1.

In accordance with another aspect of the present disclosure, a method for manufacturing a vehicle underbody cover includes:
dispersing a reinforcing fiber and a bicomponent polymer fiber in an acidic aqueous solution to prepare a slurry solution;
forming a web from the slurry solution by a wet-laid process; and
heat treating and drying the formed web to manufacture a composite sheet;
stacking at least two of the composite sheets, followed by press-forming to manufacture a composite preformed board;
stacking coating layers on both surfaces of the composite preformed board;
heating and expanding the composite preformed board on which the coating layers are stacked on both surfaces; and
mold-pressing the expanded composite preformed board on which the coating layers are stacked on both surfaces to manufacture a molded vehicle underbody cover;
wherein the reinforcing fiber is an inorganic fiber or an organic fiber,
the bicomponent polymer fiber includes a core part and a sheath part,
the core part includes a first thermoplastic resin, and the sheath part includes a second thermoplastic resin, and
a melting point of the first thermoplastic resin is higher than that of the second thermoplastic resin;
wherein a weight ratio of a content of the reinforcing fiber and the bicomponent fiber is from 20 : 80 to 60 : 40; and
wherein a specific gravity of the core part of the bicomponent polymer fiber is more than 1.

### [Advantageous Effects]

The vehicle underbody cover may realize light weight property while realizing high mechanical strength such as tensile strength, bending strength, and impact strength, and may also have excellent sound absorption performance.

### [Description of Drawings]

FIG. 1 is a cross-sectional view of a vehicle underbody cover according to an exemplary embodiment of the present disclosure.
FIG. 2 is a schematic diagram showing a central layer of a vehicle underbody cover according to another exemplary embodiment of the present disclosure.
FIG. 3 shows that the central layer is formed by applying heat and pressure to a reinforcing fiber and a bicomponent polymer in a method for manufacturing a vehicle underbody cover according to another exemplary embodiment of the present disclosure.
FIG. 4 schematically shows a method for manufacturing a vehicle underbody cover according to still another exemplary embodiment of the present disclosure.
FIG. 5 is SEM images showing inner parts of porous preformed boards manufactured in Examples 1 and 2 used for manufacturing the central layer in the method for manufacturing a vehicle underbody cover according to still another exemplary embodiment of the present disclosure.
FIG. 6 is SEM images showing enlarged cross-sections of glass fibers on cut surfaces of the porous preformed boards manufactured in Examples 1 and 2 used for manufacturing the central layer in the method for manufacturing a vehicle underbody cover according to still another exemplary embodiment of the present disclosure.

### [Best Mode]

Hereinafter, exemplary embodiments of the present disclosure will be described in detail. However, the following exemplary embodiments are only provided by way of example of the present disclosure, and the present disclosure is not limited thereto, but may be defined only by the scope of the following claims.

According to an exemplary embodiment of the present disclosure, there is provided a vehicle underbody cover including: a central layer; and coating layers arranged on both surfaces of the central layer, wherein the central layer includes: a first fibrous particle; a second fibrous particle; and a binding material for binding the first fibrous particle and the second fibrous particle, the first fibrous particle and the second fibrous particle are bound by the binding material so as to form an irregular network structure including pores, the first fibrous particle is an inorganic fiber or an organic fiber, the second fibrous particle includes a first thermoplastic resin, the binding material includes a second thermoplastic resin, and a melting point of the first thermoplastic resin is higher than a melting point of the second thermoplastic resin.

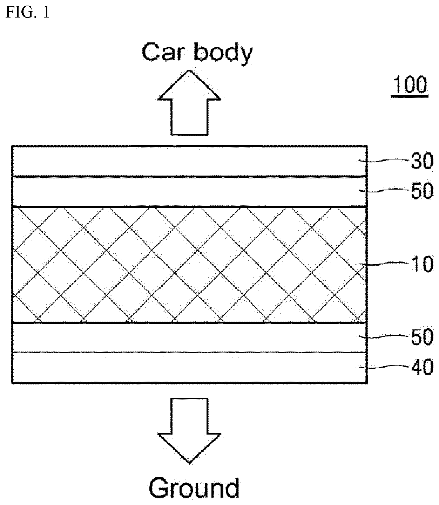

FIG. 1 is a cross-sectional view of a vehicle underbody cover 100 according to an exemplary embodiment of the present disclosure.

In the central layer 10, the first fibrous particle and the second fibrous particle may be partially or entirely coated with the binding material component. That is, the first fibrous particle and the second fibrous particle form coating parts formed by the binding material on the surfaces of the respective particles.

In the central layer, 10, the respective coating parts of the first fibrous particle and the second fibrous particle may be fused to each other, such that the first fibrous particle and the second fibrous particle may be irregularly bound to each other. The first fibrous particle and the second fibrous particle as bound above may form an irregular network structure including pores.

The coating layers 30 and 40 arranged on both surfaces of the central layer 10 are stacked. The coating layers 30 and 40 are each applied to a vehicle so that one is fixed to a car body and the other is directed to the lower ground.

The coating layers 30 and 40 may be attached to the central layer 10 by an adhesive layer. That is, the vehicle underbody cover may further include an adhesive layer 50 that adheres the coating layers 30 and 40 and the central layer 10 between the coating layers 30 and 40 and the central layer 10.

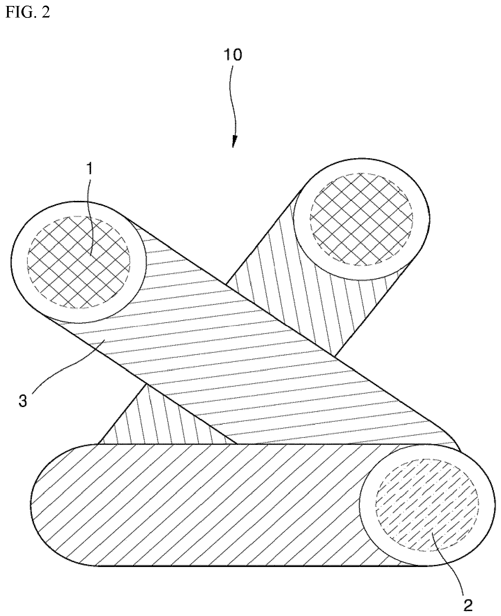

FIG. 2 is a schematic diagram showing a central layer of a vehicle underbody cover according to another exemplary embodiment of the present disclosure. In FIG. 2, the central layer 10 may be formed of a porous fiber-reinforced composite including a first fibrous particle 1, a second fibrous particle 2; and a binding material 3.

Since the porous fiber-reinforced composite forming the central layer is a material that is able to implement high mechanical strength such as tensile strength, flexural strength, and impact strength, and to implement light weight due to low density, the porous fiber-reinforced composite may be effectively applied to a vehicle underbody cover requiring these properties. Further, the vehicle underbody cover including the central layer formed of the porous fiber-reinforced composite may satisfy excellent sound absorption performance and may have excellent formability.

The porous fiber-reinforced composite improves formability, i.e., shape property, of a curved part of the vehicle underbody cover.

The vehicle underbody cover is manufactured in various shapes to fit components of a bottom part of a car body, and includes a number of curved parts. Particularly, the formability and strength of the underbody cover at a portion where the underbody cover is fixed corresponding to the car body having a mounting portion formed by a deep drawing process greatly affect the quality of the vehicle to which the underbody cover is finally applied. Since the porous fiber-reinforced composite is excellent in formability and strength to have excellent formability or shape property of the curved part, it is very useful for application to the vehicle underbody cover including a number of curved parts.

In addition, an elongation rate of a material is very important when forming such portions. For example, the elongation rate of 100% or more is generally required. If a drawing part is damaged in a vehicle product to which an underbody cover having an inadequate elongation rate is applied, the underbody cover may be detached from the car body, causing defects. The porous fiber-reinforced composite is advantageous for forming a severely curved portion since the second fibrous particle of the thermoplastic resin having a relatively high elongation rate in addition to the first fibrous particle is present as a reinforcing fiber in the material even after forming the underbody cover.

The central layer made of the porous fiber-reinforced composite may be formed in the method for manufacturing a vehicle underbody cover to be described below, and the porous fiber-reinforced composite of the thus manufactured central layer may be manufactured by well dispersing the first fibrous particle and the second fibrous particle.

When the first fibrous particle and the second fibrous particle are well dispersed in the resin, bonding strength between the fibers and the resin is increased, and thus, strength of the porous fiber-reinforced composite is improved.

The porous fiber-reinforced composite of the central layer may improve the dispersion of the first fibrous particle and the second fibrous particle (for convenience, also referred to as 'fibrous particles') to obtain an effect of improving strength, based on the correlation between dispersibility and strength as appreciated above.

An example of a method for confirming that the dispersibility of the fibrous particles included in the central layer formed of the porous fiber-reinforced composite is improved may include a method for evaluating a cross-section of the porous fiber-reinforced composite by a color difference meter. As the dispersibility of the fibrous particles is increased, a part in which the fibrous particles are agglomerated becomes smaller, and thus, white color is more uniformly exhibited. On the contrary, when the dispersibility of the fibrous particles is decreased, the part in which the fibrous particles are agglomerated and overlapped with each other becomes larger, and thus, the part becomes darker. The difference may be evaluated by using the color difference meter.

An indirect method for confirming that the dispersibility of the fibrous particles included in the porous fiber-reinforced composite of the central layer is improved may include comparison of strength. When the dispersibility of the fibrous particles is improved, the strength of the porous fiber-reinforced composite of the central layer is improved. Thus, porous fiber-reinforced composite of the central layer may be manufactured so that only dispersibility of the fibrous particles is different, for example, by changing the manufacturing method, etc., while maintaining other conditions such as the kind, and contents, etc., of the first fibrous particle, the second fibrous particle, and the binding material included in the porous fiber-reinforced composite of the central layer, and then, strength thereof may be compared to each other.

The porous fiber-reinforced composite of the central layer has excellent dispersibility of the first fibrous particles and the second fibrous particles, thereby implementing more excellent mechanical strength as described above, and thus, light weight may be achieved.

In order to form the porous fiber-reinforced composite of the central layer, the composite sheet to be manufactured in the method for manufacturing a vehicle underbody cover to be described below may be manufactured into a sheet in which the first fibrous particle and the second fibrous particle have one-direction orientation. The central layer may be manufactured by stacking a plurality of such composite sheets. The central layer may be manufactured by stacking the composite sheets so that orientation is consistent, wherein the composite sheets are manufactured to have the same orientation properties. As described above, when the one-direction orientation is imparted to the porous fiber-reinforced composite of the central layer, the central layer has high mechanical properties along a direction in which the orientation is imparted. The central layer manufactured to have the one-direction orientation may withstand a large force in a specific direction. Therefore, the vehicle underbody cover may include the central layer having the one-direction orientation, in accordance with the application that needs to withstand a large force in a specific direction.

The porous fiber-reinforced composite of the central layer includes two types of reinforcing fibers, that is, first fibrous particle and second fibrous particle. The porous fiber-reinforced composite of the central layer may include both of the first fibrous particle and the second fibrous particle together to thereby be designed so that predetermined characteristics are excellently expressed by controlling kinds and content ratios thereof.

For example, by using a material having a high tensile elastic modulus such as a glass fiber as the first fibrous particle and using a thermoplastic fiber formed of a thermoplastic resin as the second fibrous particle, it is possible to further improve strength additionally while simultaneously providing elasticity of the thermoplastic resin. Since the thermoplastic resin forming the second fibrous particle is a thermoplastic resin having a relatively high melting point, it is possible to expect improvement of additional strength as compared to a case where only the first fibrous particle is present. Further, since the thermoplastic fiber has excellent elasticity as compared to the first fibrous particle, impact energy may be effectively attenuated against impact from the outside.

Further, since the melting point of the first thermoplastic resin included in the binding material is relatively low, the porous fiber-reinforced composite has low-temperature formability.

According to the invention, a weight ratio of a content of the first fibrous particle to the sum of contents of the second fibrous particle and the binding material in the porous fiber-reinforced composite of the central layer may be about 20 : 80 to about 60 : 40, specifically, about 30 : 70 to about 50 : 50. As the content of the first fibrous particle is higher, strength may be more excellent, but the degree of improvement may be reduced at a predetermined content or more. The above-described range of content is appropriate for effectively securing an effect in which strength is improved according to an increase in the content of the first fibrous particle, while simultaneously for achieving an effect obtained from the second fibrous particle.

The second fibrous particle and the binding material depend on the bicomponent polymer fiber in the method for manufacturing the porous fiber-reinforced composite to be described below. Therefore, in the method for manufacturing the porous fiber-reinforced composite to be described below, the content of the first fiber fibrous particle and the content of the bicomponent polymer fiber may be adjusted within the above-described range to manufacture the central layer having the above-described content ratio.

In another exemplary embodiment, the porous fiber-reinforced composite of the central layer may include about 50 parts by weight to about 250 parts by weight of the binding material relative to 100 parts by weight of the second fibrous particle. A content ratio of the second fibrous particles and the binding material may be adjusted according to the above-described content ratio, and thus, excellent dispersibility may be maintained while appropriately imparting bonding strength and elasticity.

As described above, in the method for manufacturing the vehicle underbody cover to be described below, the content ratio of the second fibrous particle and the binding material may be implemented by adjusting a content ratio of a core part and a sheath part of the bicomponent polymer fiber.

The first fibrous particles may include at least one selected from the group consisting of glass fibers, aramid fibers, carbon fibers, carbon nanotubes, boron fibers, metal fibers, and a combination thereof. Examples of the metal fiber may include nickel fibers, iron fibers, stainless steel fibers, copper fibers, aluminum fibers, silver fibers, and gold fibers.

Specifically, the first fibrous particle may have a cross-sectional diameter of about 5 µm to about 40 µm. The first fibrous particle having a thickness within the above-described range may provide appropriate strength and secure orientation and dispersibility. The porous fiber-reinforced composite including the first fibrous particle having a thickness in the above-described range may be resistant to external impact, and when the first fibrous particles are dispersed in an aqueous solution at the time of manufacturing according to the method for manufacturing the vehicle underbody cover to be described below, it is possible to provide an appropriate hydroentangle property in the aqueous solution, and thus, the composite sheet may be easily formed.

The first fibrous particle may have a length of about 1 mm to about 50 mm. The first fibrous particle having the above-described range of length may provide appropriate strength and secure orientation and dispersibility, and further, may provide appropriate bonding strength between the fibrous particles, such that the porous fiber-reinforced composite may have excellent strength, while simultaneously preventing reduction in dispersibility causing when the fiber is entangled and aggregated due to an excessive long length, and it is appropriate for forming the sheet.

The first thermoplastic resin capable of forming the second fibrous particle may include at least one selected from the group consisting of polyester, polypropylene (PP), polyethylene (PE), acrylbutadiene styrene (ABS), polycarbonate (PC), nylon, polyvinyl chloride (PVC), polystyrene (PS), polyurethane (PU), polymethylmethacrylate (PMMA), polylactic acid (PLA), polytetrafluoroethylene (teflon), and a combination thereof. The first thermoplastic resin capable of forming the second fibrous particle may be, for example, polypropylene or polyester.

The second thermoplastic resin capable of forming the binding material may include at least one selected from the group consisting of polyester, polypropylene (PP), polyethylene (PE), acrylbutadiene styrene (ABS), polycarbonate (PC), nylon, polyvinyl chloride (PVC), polystyrene (PS), polyurethane (PU), polymethylmethacrylate (PMMA), polylactic acid (PLA), polytetrafluoroethylene (teflon), and a combination thereof.

As described above, when the first thermoplastic resin and the second thermoplastic resin are selected as exemplified above, the melting point of the first thermoplastic resin is required to be higher than that the second thermoplastic resin.

Further, the first thermoplastic resin and the second thermoplastic resin may be selected, respectively, so that the core part and the sheath part of the bicomponent polymer fiber used in the method for manufacturing the vehicle underbody cover to be described below satisfy the conditions above.

Specifically, the melting point of the first thermoplastic resin may be about 160°C or more. More specifically, the melting point of the first thermoplastic resin may be about 200°C to about 400°C. By allowing the first thermoplastic resin to have the melting point within the above-described range, a fibrous phase may be maintained even after the binding material is melted at the time of low temperature forming. When the melting point of the first thermoplastic resin is less than 160°C, a thermoforming temperature needs to be excessively reduced to maintain the fibrous phase. Otherwise, in the porous fiber-reinforced composite including the first thermoplastic resin having a melting point less than 160°C, thermal stability may be deteriorated later, and dimensional changes or polymer degeneration, etc., may be caused. Further, a temperature difference with the second thermoplastic resin may be excessively reduced, and thus, it may be difficult to adjust a forming temperature.

For example, the first thermoplastic resin may be polyethylene terephthalate.

Specifically, the melting point of the second thermoplastic resin may be less than about 200°C. The binding material may serve to bind the first fibrous particle and the second fibrous particle. When the second thermoplastic resin forming the binding material has a lower melting point than that of the first thermoplastic resin, that is, a material having a relatively low melting point is selected as the second thermoplastic resin, it may be melted at a low temperature, and thus, the low-temperature formability may be secured. As the binding material, for example, low melting point polyester, polypropylene, etc., may be used. Since the low melting point polyester is melted at about 100°C to about 140°C which is lower than that of a general polyester, and polypropylene is melted at about 160°C, low melting point polyester, specifically, low melting point polyethylene terephthalate, polypropylene, polyethylene, etc., may be appropriately selected according to the molding temperature to be applied.

In another exemplary embodiment, a specific gravity of the first thermoplastic resin is more than about 1. In the method for manufacturing the vehicle underbody cover to be described below, the bicomponent polymer fiber is dispersed in an acidic aqueous solution. It is required to use a material having a specific gravity higher than 1 which is the specific gravity of water since it is easy to improve dispersibility and form a network structure. Accordingly, the core part of the bicomponent polymer fiber may be a thermoplastic resin having the specific gravity higher than 1, such as polyester.

The second fibrous particle may have a cross-sectional diameter of about 5 µm to about 30 µm. The second fibrous particle having a thickness within the above-described range may provide appropriate strength and secure orientation and dispersibility. The porous fiber-reinforced composite including the first fibrous particle having a thickness in the above-described range may have excellent strength properties, and when the first fibrous particles are dispersed in an aqueous solution at the time of manufacturing according to the method for manufacturing the vehicle underbody cover to be described below, it is possible to provide an appropriate hydroentangle property in the aqueous solution, and thus, the composite sheet may be easily formed.

The second fibrous particle may have a length of about 1 mm to about 50 mm. The second fibrous particle having the above-described range of length may provide appropriate strength and secure orientation and dispersibility, and further, may provide appropriate bonding strength between the fibrous particles, such that the porous fiber-reinforced composite may have excellent strength, while simultaneously preventing reduction in dispersibility causing when the fiber is entangled to form a rope shape due to an excessive long length, and it is appropriate for forming the sheet.

The porous fiber-reinforced composite of the central layer may have a porosity of about 30% to about 80% by volume. As described above, the porous fiber-reinforced composite of the central layer forms open pores while forming a network structure. The porous fiber-reinforced composite of the central layer having the porosity in the above-described range may realize light weight while maintaining strength, and may also have excellent sound absorption performance.

Sound waves coming through open pores of the porous fiber-reinforced composite of the central layer are attenuated by vibration of the fibers of the second fibrous particle, and thus, the porous fiber-reinforced composite may be applied as a sound-absorbing material. As the porosity of the porous fiber-reinforced composite of the central layer is higher, the content of the second fibrous particle is higher, and a length through which the sound waves pass, an effect in which energy is attenuated may be excellent. The length through which the sound waves pass is increased when, for example, a thickness of the material itself is large or when the pore connectivity is good even if the porosity is the same. The porous fiber-reinforced composite of the central layer may be manufactured as a material having a predetermined degree of porosity, and having an improved sound absorption performance by adjusting the content of the second fibrous particle and further controlling the length through which the sound waves pass. In particular, since the second fibrous particles are more flexible than the hard first fibrous particles, the effect in which the sound energy is attenuated is high, and thus, the second fibrous particle effectively improve the sound absorption performance.

The porous fiber-reinforced composite of the central layer may achieve light weight as described above. Specifically, the porous fiber-reinforced composite may have a density of about 0.1 g/cm³ to about 1.6 g/cm³.

The porous fiber-reinforced composite of the central layer may be manufactured to have a weight suitable for the usage to be applied, and may be manufactured to have a weight of about 600 g/m² to about 3000 g/m².

The coating layer may be a nonwoven fabric such as a PET chemical nonwoven fabric, a PP nonwoven fabric, a spun bonded nonwoven fabric, a hot air bonding nonwoven fabric, a spun lace, or a needle punching nonwoven fabric. Further, in addition to the nonwoven fabric, a heat insulating skin material such as an aluminum foil, or the like, or a skin material having improved sound absorption performance such as a perforated sheet, or the like, may be applied, and a combination thereof may also be applied.

In another exemplary emboidment of the present disclosure, there is provided a method for manufacturing a vehicle underbody cover including:
dispersing a reinforcing fiber and a bicomponent polymer fiber in an acidic aqueous solution to prepare a slurry solution;
forming a web from the slurry solution by a wet-laid process; and
heat treating and drying the formed web to manufacture a composite sheet;
stacking at least two of the composite sheets, followed by press-molding to manufacture a composite preformed board;
stacking coating layers on both surfaces of the composite preformed board;
heating and expanding the composite preformed board on which the coating layers are stacked on both surfaces; and
mold-pressing the expanded composite preformed board on which the coating layers are stacked on both surfaces to manufacture a molded vehicle underbody cover.

The above-described porous fiber-reinforced composite may be manufactured by the above-described method for manufacturing a vehicle underbody cover.

The molded vehicle underbody cover manufactured as described above includes the central layer, and the coating layers arranged on both surfaces of the central layer.

The above-described vehicle underbody cover may be manufactured by the above-described method for manufacturing a vehicle underbody cover.

Conventionally, a method in which the reinforcing fiber and the thermoplastic resin are mixed by using a dry process such as air-laid, dry-laid, spun-lace, needle-punching, or the like, to manufacture the porous composite material such as fleece into a sheet form or a mat form is known. When the composite material is manufactured through such a process, it is difficult to apply an additive and dispersibility may be deteriorated. On the other hand, in the method for manufacturing the vehicle underbody cover, the wet-laid process may be used, and thus, it is possible to easily apply additives such as a foaming agent, a dispersant, and a cross-linking agent, etc., and to manufacture the porous composite having improved dispersibility which greatly affects strength and sound absorption performance.

The vehicle underbody cover is formed into a porous structure to thereby have a weight reduction effect, and further have improved sound absorption performance due to an air permeable structure provided by the porous material.

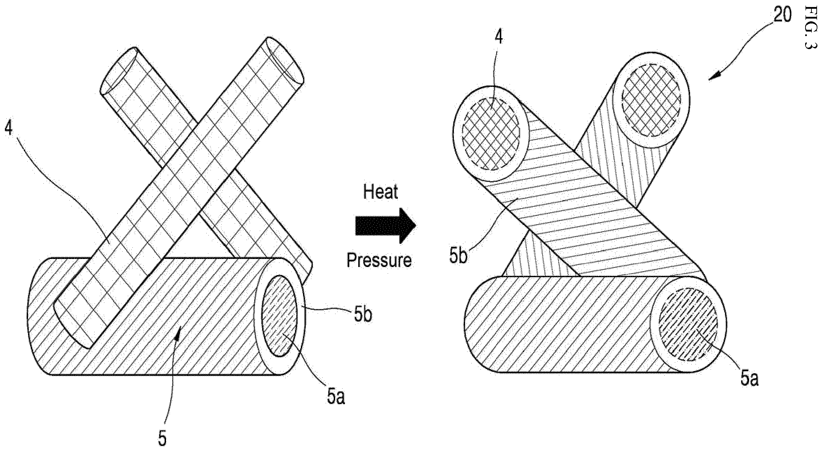

FIG. 3 shows that the porous fiber-reinforced composite 20 is formed by applying heat and pressure to the reinforcing fiber 4 and the bicomponent polymer 5 in the step of manufacturing the composite sheet in the method for manufacturing a vehicle underbody cover.

The composite sheet, the composite preformed board manufactured by stacking the composite sheets, followed by press-forming, and the central layer of the vehicle underbody cover after expanding the composite preformed board, followed by molding, which are manufactured by the method for manufacturing the vehicle underbody cover are composed of the porous fiber-reinforced composite 20 formed as shown in FIG. 3.

The reinforcing fiber 4 may be the first fibrous particle described above. Therefore, a detailed description of the reinforcing fiber 4 is the same as described for the first fibrous particle. The reinforcing fiber 4 may be an inorganic fiber or an organic fiber as described above.

The bicomponent polymer fiber 5 includes a core part 5a and a sheath part 5b, and the core part 5a includes the first thermoplastic resin, and the sheath part 5b includes the second thermoplastic resin.

The melting point of the first thermoplastic resin is higher than that of the second thermoplastic resin.

Detail descriptions of the first thermoplastic resin and the second thermoplastic resin are the same as described above.

In the step of heat treating and drying, the second thermoplastic resin of the sheath part may be melted to bind the reinforcing fiber and the bicomponent polymer fiber by heat fusion, thereby forming an irregular network structure including pores.

The second thermoplastic resin of the sheath part is present in a state in which the core part is coated, and is melted in the heat treatment and drying step and transferred to the reinforcing fiber to partially or entirely coat the reinforcing fiber, and as the melted state is solidified, the sheath part acts as the binding material for binding the core part of the bicomponent fiber and the reinforcing fiber.

As described above, since the sheath acts as the binding material, a separate binding material may not be additionally used in the method for manufacturing the vehicle underbody cover.

The thermoplastic resin forming the sheath part of the bicomponent polymer fiber has a relatively low melting point, and thus, it is possible to perform low-temperature forming.

The porosity of the porous fiber-reinforced composite, and the degree of coating transferred to the reinforcing fiber, etc., may be adjusted by changing the contents of the core part and the sheath part of the bicomponent polymer fiber.

For example, in the bicomponent polymer fiber, the sheath part may have a weight of about 50 parts by weight to about 250 parts by weight based on 100 parts by weight of the core part.

In the method for manufacturing the vehicle underbody cover, even though the bicomponent polymer fiber formed of the chemically hydrophobic thermoplastic resin is dispersed into the acidic aqueous solution, dispersibility may be improved by constituting the bicomponent polymer fiber into the core part and the sheath part, and increasing the specific gravity of the core part. As described above, when the specific gravity of the core part of the bicomponent polymer fiber is larger than 1, the degree of dispersion may be effectively improved during a process of stirring in the aqueous solution.

In the reinforcing fiber and the bicomponent polymer fiber, the sheath part may be surface-treated to further improve dispersibility in the acidic aqueous solution. As a result, it is possible to prepare a porous fiber-reinforced composite having more excellent dispersibility.

The surface treatment of the sheathing part of the reinforcing fiber and the bicomponent polymer fiber may be performed by introducing a functional group such as a fluorine group, a hydroxyl group, a carboxyl group, an alkyl group, or the like, onto a surface or by coating the surface with a coating agent. For example, when preparing the reinforcing fiber or the bicomponent fiber polymer fiber, a surface treatment agent capable of acting on the surface of the reinforcing fiber or the surface of the sheath part of the bicomponent polymer fiber to introduce the functional group may react with the fibers by a dipping process, etc.

Specifically, the reinforcing fiber or the bicomponent polymer fiber may be subjected to silane treatment by the surface treatment agent or the coating agent usable in the preparation of the reinforcing fiber or the bicomponent polymer fiber, thereby improving bonding strength between the fibers, improving heat resistance by carbonization, improving hydrophilicity by hydrolysis, or improving water dispersibility by oxidation.

Examples of the surface treatment agent may include a fluorine-based wax (for example, PFAO, or the like), a hydrocarbon-based wax, and a silicone-based polymer, etc.

The coating agent may impart properties such as hydrophilicity / hydrophobicity, water repellency, flame retardancy, nonflammability, heat resistance, acid resistance, alkali resistance, durability, and stain resistance, etc., depending on components thereof. Specifically, as the coating agent, a water-repellent agent such as a fluorine-based wax (for example, PFAO, or the like), a hydrocarbon-based wax, or a silicone-based polymer compatibilizer, or the like, may be used.

A content ratio of the reinforcing fiber and the bicomponent polymer component may be adjusted depending on desired physical properties of the porous fiber-reinforced composite to be manufactured.

For example, the weight ratio of the reinforcing fiber and the bicomponent polymer component may be about 20 : 80 to about 60 : 40, and specifically, about 30 : 70 to about 50 : 50.

Specifically, in the method for manufacturing the vehicle underbody cover, the reinforcing fiber and the bicomponent polymer fiber may be mixed so that a total content of the reinforcing fiber and the bicomponent polymer fiber may be about 0.1 g to about 10 g per 1L of the acidic aqueous solution. By adjusting the total content of the reinforcing fiber and the bicomponent polymer fiber within the above-described range, it is possible to maintain excellent dispersibility to manufacture a sheet having a uniform thickness, and to secure physical properties due to excellent dispersibility.

The acidic aqueous solution may have a pH of about 1 to about 4. By adjusting the pH of the acidic aqueous solution to the above-described range, charges on the surface of the glass fiber may be generated without causing chemical decomposition of silica (SiO₂), alumina (Al₂O₃), or boron (B₂O₅) which is a glass fiber component, due to the strong acid, and thus, dispersibility may be further improved.

The method for manufacturing the vehicle underbody cover may further include: stirring the slurry solution. By further including the step of stirring the slurry solution, the dispersibility may be further improved.

In the method for manufacturing the vehicle underbody cover, the step of heat treating and drying the formed web may be performed at about 100 to about 180 . The temperature range is determined based on a temperature at which the sheath part of the bicomponent fiber begins to soften or melt. When the temperature is lower than 100 , it is difficult to dry moisture, and the bicomponent polymer fiber (sheath part) does not sufficiently soften, and thus, moisture may remain after drying into the sheet form to form the composite sheet, and it is difficult for the composite sheet to have a fixed shape. On the contrary, when the temperature is higher than 180 , the sheath part of the bicomponent polymer fiber is completely melted, and thus, the bicomponent fiber is difficult to be uniformly transferred to the reinforcing fiber. Further, there is a concern that the sheath part polymer of the bicomponent polymer fiber may be degenerated at a melting point or higher.

By appropriately adjusting the cross-sectional diameter of the core part of the bicomponent polymer fiber, and heat-treating and drying at an appropriate heat treatment temperature, the core of the bicomponent polymeric fiber may not be melted, but may be included in the central layer of the vehicle underbody cover that is finally manufactured with the fibrous particles.

During the wet-laid process, the fibers are uniformly mixed in the slurry aqueous solution to form a hydro-entangled web along a mesh that is transported along a conveyor belt, wherein an inclination may be imparted as the fibers rise along the mesh, and thus, the composite sheet manufactured as described above may have orientation. In the composite preformed board obtained by stacking the composite sheet having the orientation as described above and the central layer of the finally manufactured vehicle underbody cover, strength in one direction may be further strengthened by imparting orientation in one direction to the fiber component.

For example, as the content of the second fibrous particles is increased, it may be disadvantageous in view of dimensional stability, and thus, the orientation may be imparted to complement the dimensional stability.

As described above, the central layer of the finally manufactured vehicle underbody cover may be manufactured so as to selectively impart the orientation according to the intended application.

For example, when the fibers are transported from a head box to the conveyor belt to thereby form a composite sheet, an inclination may be imparted to a part where the composite sheet is formed (inclined web formation), and thus, it is possible to design the process so that the fibers are able to be laid well in a machine direction (MD) as compared to the planar conveyor belt. The directionality may be imparted in the MD (machine direction) and a cross direction (CD) separately, and it is easier to impart the directionality in the MD direction as compared to the CD direction.

The slurry solution may further include an additive such as a crosslinking agent, or an additional binder.

The crosslinking agent acts to strengthen chemical bonding strength between the reinforcing fiber and the bicomponent polymer fiber. For example, a silane-based compound, a maleic acid-based compound, etc., may be used as the crosslinking agent.

A content of the crosslinking agent may be about 0 to about 5 parts by weight based on 100 parts by weight of the total fibers (the sum of reinforcing fiber and bicomponent polymer fiber).

The additional binder may be a water soluble polymer such as starch, casein, polyvinyl alcohol (PVA), carboxymethyl cellulose (CMC), etc.; emulsions such as polyethylene, polypropylene, polyamide, etc.; inorganic compounds such as cement, calcium sulfate-based clay, sodium silicate, alumina silicate, and calcium silicate, etc.

A content of the additional binder may be about 0 to about 5 parts by weight based on 100 parts by weight of the total fibers (the sum of reinforcing fiber and bicomponent polymer fiber).

When the dispersibility of the fibrous particles is good, the composite sheet formed through the web from the slurry solution has a low thickness deviation in the composite sheet. As the dispersibility of the fibrous particles is increased, a part in which the fibrous particles are agglomerated becomes smaller. On the contrary, when the dispersibility of the fibrous particles is decreased, the fibrous particles become agglomerated. When the fibrous particles are agglomerated, a thickness of the sheet corresponding to the agglomeration becomes increased. Therefore, the sheet of the composite sheet having excellent dispersibility of the fibrous particles has a predetermined thickness. That is, the thickness deviation in the composite sheet of the fibrous particles having excellent dispersibility becomes small.

In an exemplary embodiment, the composite sheet may have a thickness deviation in the composite sheet of about 2 mm or less.

In another exemplary embodiment, the composite sheet may have a thickness deviation in the composite sheet of about 0.3 mm or less.

The 'thickness deviation in the composite sheet' means a difference between the maximum thickness and the minimum thickness in one composite sheet.

The composite preformed board may be formed by compressing at least two of the composite sheets. Specifically, it is possible to determine how many sheets are stacked according to desired weight per unit area of the final product. For example, if the final weight per unit area of the desired product is 1200 g/m², about 2 to 12 composite sheets may be stacked, and then may be subjected to heat-press forming by applying heat and pressure, thereby manufacturing a composite preformed board.

The vehicle underbody cover is advantageously obtained by firstly forming the composite preformed board as described above, and then heating and expanding the composite preformed board again to perform molding.

One of the advantages is to heat the composite preformed board to appropriately adjust an expansion degree, thereby manufacturing a finally formed product with various thicknesses. For example, if the expansion height is 10 mm, the product may be formed to have a thickness of 1 to 8 mm, but if the expansion height is 6 mm, it may be formed to have a thickness of only about 1 to 5 mm.

In the case of the underbody cover product, a thicker part has relatively low density, and thus, sound absorption performance is excellent, but a thinner part has high density, and thus, binding force between fibers is improved to exhibit excellent properties in tensile strength and flexural strength. Thus, there is a need to manufacture the final product so as to have a suitably varying thickness.

The vehicle underbody cover may be manufactured to have various thicknesses by using the composite preformed board, and thus, it is advantageous to adjust physical properties in implementing sound absorption property and excellent strength.

Specifically, in the vehicle underbody cover, a screw joint portion or a trim portion where the strength is important may be formed to have a thickness of 2 mm or less with density close to 100%, and portions where the strength is not relatively important (such as central part, etc.) may be molded to have a thickness of 3.5 mm or more.

The heat-press forming may be performed at a temperature at which the sheath part of the bicomponent fiber is able to be melted while the core part is not melted. When the temperature is within the above-described range, the sheath part may be melted and an interface between the composite sheets may be fused.

Specifically, the press-forming may be performed by applying a pressure of about 1 to about 30 bar at a temperature of about 100 to about 180 to laminating molding the composite sheet, thereby manufacture the composite preformed board.

The heat-press forming may be performed so that the composite preformed board is able to be continuously manufactured by double belt press forming.

The composite preformed board may have density of about 0.2 g/cm³ to about 1.6 g/cm³. The composite preformed board may be compressed and manufactured so as to have the density within the above-described range, and then, it is possible to exhibit more excellent strength in a product implemented by additional forming. If the density of the composite preformed board is less than 0.2 g/cm³, when the composite preformed board is pre-heated to manufacture a final product, heat transfer distribution (degree of fusing) at the surface-central part may be varied, which may cause deterioration of physical properties. If the density of the composite preformed board is more than 1.6 g/cm³, high pressure is required to increase the density at the time of molding later, and thus, the glass fiber may be broken during the press work, which may cause deterioration of physical properties.

The composite preformed board may be manufactured to have a thickness of about 0.5 mm to about 10 mm.

As described above, the composite preformed board is manufactured by well dispersing the first fibrous particle and the second fibrous particle.

If the first fibrous particle and the second fibrous particle are well dispersed in the resin, the bonding strength between the fibers and the resin is increased, and thus, the strength of the composite sheet, the composite preformed board, and the vehicle underbody cover manufactured therefrom is improved.

The central layer of the vehicle underbody cover obtains the effect of improving the strength by improving the dispersion of the fibrous particles based on the correlation between the dispersibility and the strength thus obtained.

The composite preformed board manufactured by compressing as described above may have excellent dispersibility of the fibrous particles to thereby have uniformly excellent mechanical properties throughout the composite preformed board. For example, the composite preformed board exhibits uniformly excellent impact strength results even when impact strength characteristics are evaluated at various points. Specifically, in the impact strength obtained by performing the falling ball impact test according to ASTM D3763 on the composite preformed board, a difference between the maximum value and the minimum value of the impact strength obtained in one composite preformed board may be 0.2 J/mm or less. In other words, it means that the difference in impact strength according to ASTM D3763 measured at any two points in the composite preformed board may be 0.2 J/mm or less.

When a final vehicle underbody cover is manufactured through the composite preformed board, the obtained final vehicle underbody cover may have low density while realizing high mechanical strength such as excellent tensile, bending, and impact strength, thereby implementing light weight.

The composite preformed board is an intermediate material manufactured in a compressed state by press-forming. Specifically, the degree of compression may be a level of an expansion rate of 200 to 600% by volume, specifically 400 to 600% by volume, relative to initial volume upon standing at about 140 to about 240 for about 0.5 to about 10 minutes.

The composite preformed board may be manufactured in the pressed state as described above and then expanded by an additional molding process, such as lofting, to be molded. In the composite preformed board, the binding material binds the elastic fibrous particles, and at the time of heating, the second thermoplastic resin of the binding material is softened or melted, and the binding force of the fibrous particles is relaxed and generated, thereby expanding the composite preformed board.

In the composite preformed board, the fibrous particles of the first fibrous particle and the second fibrous particle are entangled with each other by blending the proper content of the first fibrous particles exhibiting excellent mechanical properties with the second fibrous particles at an appropriate ratio, and thus, a ratio of the fibers subjected to stress becomes higher, contributing to improvement of expandability. Further, the presence of the second fibrous particle of the thermoplastic resin contributes to the improvement of the expandability.

As described above, the composite preformed board may exhibit excellent expandability in the subsequent molding process to thereby may be molded into various thicknesses during molding.

In order to maximize the expandability, a separate expansion agent may be added. As described above, since the composite preformed board is excellent in expandability, the composite preformed board may be expanded to a predetermined level in the subsequent molding process to thereby be formed without including the expansion agent. Thus, the composite preformed board may include the expansion agent for a specific purpose, but the composite preformed board may not include the expansion agent.

The coating layers to be laminated on both surfaces of the composite preformed board may be a nonwoven fabric such as a PET chemical nonwoven fabric, a spun bonded nonwoven fabric, or a hot air bonding nonwoven fabric.

The coating layer may be adhered to the composite preformed board using an adhesive, and in this case, a finally obtained vehicle underbody cover further includes an adhesive layer which adheres the coating layer and the central layer in the central layer.

Subsequently, the composite preformed board on which the coating layers are stacked on both surfaces may be heated and expanded. Specifically, the composite preformed board may be allowed to stand at a temperature of about 140 to about 240 for about 0.5 to about 10 minutes. The composite preformed board interposed between the coating layers is expanded by the heating, and the expansion degree may be then controlled by temperature and time for heating depending on mold pressing process conditions and physical properties of the vehicle underbody cover to be finally obtained.

When the composite preformed board is heated and expanded, pores included therein are increased, and thus, porosity is also increased.

The composite preformed board may be heated and expanded to about 200 to 600% by volume, wherein the porosity may be about 50 to about 90% by volume.

The vehicle underbody cover manufactured using the composite preformed board having open pores and the above-described range of porosity may satisfy excellent sound absorption performance condition.

Then, the laminate in which the coating layers are stacked on both surfaces of the expanded composite preformed board as described above is subjected to mold-pressing, thereby manufacturing a molded vehicle underbody cover.

The mold-pressing process may be performed by applying a pressure of about 1 bar to about 100 bar at a temperature of about 5 to about 100 . The mold-pressing process conditions are not limited and may be appropriately adjusted according to the physical properties of the vehicle underbody cover to be obtained.

According to another exemplary embodiment, the vehicle underbody cover may be manufactured as follows. First, after the reinforcing fiber and the bicomponent polymer fiber are blended, the blended fibers are subjected to a stirring process in an aqueous solution including the additives, and then transported to a head box where a web is able to be formed. The slurry in the headbox passes through a vacuum intake system to form the hydro-entangled web, and is manufactured into a composite sheet by passing through a dryer. The composite sheet is manufactured so that a weight of the sheet is about 50 grams to about 600 grams per square meter to easily perform subsequent thermoforming. A drying temperature is set at about 100 to about 180 according to the material of the sheath part so that the sheath part of the bicomponent polymer fiber is able to act as the binder. The manufactured sheet shaped composite material is cut according to the usage and then stacked, followed by thermocompression press, thereby manufacturing a plate-shaped composite preformed board form having a thickness of about 0.5 mm to about 10 mm.

In forming the preformed board, when a bicomponent fiber composed of a low melting point polyester sheath part is used, a temperature for the molding may be lower than that of a bicomponent polymer fiber composed of general polypropylene sheath part.

A laminate obtained by stacking a material for forming the coating layers to be applied to upper and lower portions of the composite preformed board, for example, a nonwoven fabric such as a PET chemical nonwoven fabric, a spunbonded nonwoven fabric, or a hot air-bonded nonwoven fabric on both surfaces of the composite preformed board may be heated in an infrared oven to expand the composite preformed board, and transported to a press at room temperature and pressed, thereby manufacturing the vehicle under cover.

As described above, in the laminate, the coating layers and the central layer may be fixed optionally with an adhesive layer interposed therebetween, and then may be laminated by cold pressing.

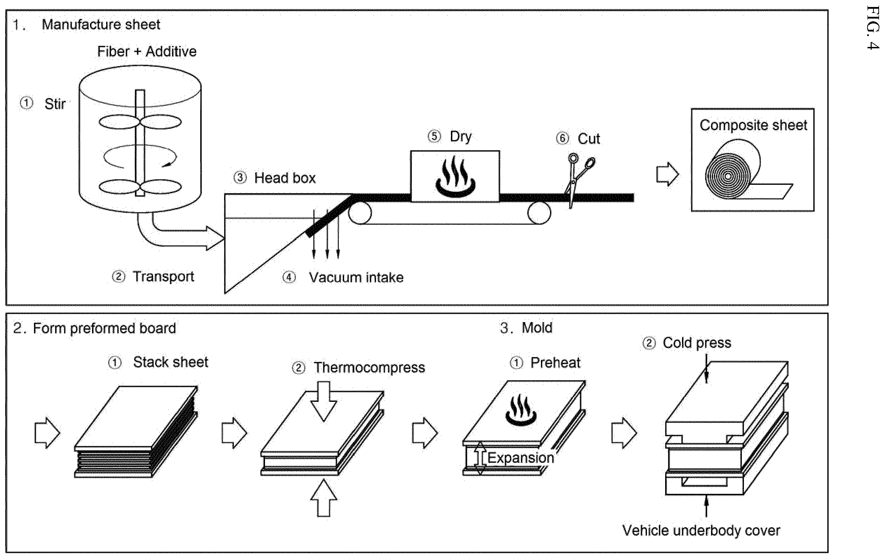

FIG. 4 schematically shows a method for manufacturing the vehicle underbody cover described according to an exemplary embodiment of the present disclosure

Hereinafter, Examples and Comparative Examples of the present disclosure will be described. However, the following Examples are only provided as one exemplary embodiment of the present disclosure, and the present disclosure is not limited to the following Examples.

### (Examples)

### Example 1

A bicomponent polymer fiber in which a polyester core part and a low melting point polyester sheath part had a weight ratio of 50 : 50, and a length was 5 mm and a thickness was 4 denier (about 20 µm in a cross-sectional diameter) to ensure water dispersibility, was prepared. A glass fiber was prepared by cutting a glass fiber having a cross-sectional diameter of 13 µm coated to be suitable for water dispersion so that a length was 13 mm. 40 parts by weight of the glass fiber and 60 parts by weight of the bicomponent polymer fiber were blended, and stirred in an aqueous solution for 1 hour, the aqueous solution having pH adjusted to 2 with hydrochloric acid. Here, a total content of the glass fiber and the bicomponent polymer fiber was 2 g per 1L of water. The aqueous solution slurry after the stirring process was subjected to a wet-laid process to form a web through a vacuum suction device in a head box. After the web was formed, the web was passed through an oven dryer at 140 to completely dry moisture, thereby manufacturing a composite sheet. The dried composite sheet had a thickness of about 1.5 mm at 120 g/m². 10 composite sheets above were stacked so that the basis weight was 1200 g/m², followed by a hot press process at 170 and 5 bar to thereby form a composite preformed board having a thickness of 1.5 mm. The composite preformed board as manufactured above was expanded through preheating in an IR oven at 200 for 2 minutes and transported to a mold-press at room temperature, followed by mold-pressing by applying a pressure of 1 bar, and thus, a vehicle underbody cover having an average thickness of 2.0 mm was completed.

### Example 2

A composite sheet was manufactured in the same manner as in Example 1, except that a glass fiber having a silane-coated special surface to improve bonding strength with a polyester resin was used instead of the glass fiber used in Example 1. Subsequently, the composite preformed board was formed in the same manner as in Example 1, expanded through preheating in the IR oven at 200 for 2 minutes, and transported to a press at room temperature. Then, the composite preformed board was pressed to complete a vehicle underbody cover having an average thickness of 2.0 mm.

### Example 3

A composite sheet was manufactured in the same manner as in Example 2, except that 10 parts by weight of the glass fiber having a silane-coated special surface used in Example 2 and 90 parts by weight of the bicomponent polymer fiber were blended. Subsequently, the composite preformed board was formed in the same manner as in Example 2, expanded through preheating in the IR oven at 200 for 2 minutes, and transported to a press at room temperature. Then, the composite preformed board was pressed to complete a vehicle underbody cover having an average thickness of 2.0 mm.

### Example 4

A composite sheet was manufactured in the same manner as in Example 2, except that 90 parts by weight of the glass fiber having a silane-coated special surface used in Example 2 and 10 parts by weight of the bicomponent polymer fiber were blended. Subsequently, the composite preformed board was formed in the same manner as in Example 2, expanded through preheating in the IR oven at 200 for 2 minutes, and transported to a press at room temperature. Then, the composite preformed board was pressed to complete a vehicle underbody cover having an average thickness of 2.0 mm.

### Example 5

A bicomponent polymer fiber in which a polyester core part and a low melting point polyester sheath part had a weight ratio of 50 : 50, and a length was 5 mm and a thickness was 4 deniers (about 20 µm in a cross-sectional diameter) to ensure water dispersibility, was prepared. A glass fiber was prepared by cutting a glass fiber having a cross-sectional diameter of 13 µm coated to be suitable for water dispersion so that a length was 13 mm. 40 parts by weight of the glass fiber and 60 parts by weight of the bicomponent polymer fiber were blended, and stirred in an aqueous solution for 1 hour, the aqueous solution having pH adjusted to 2 with hydrochloric acid. Here, a total content of the glass fiber and the bicomponent polymer fiber was 2 g per 1L of water. The aqueous solution slurry after the stirring process was subjected to a wet-laid process to form a web through a vacuum suction device in a head box. After the web was formed, the web was passed through an oven dryer at 140 to completely dry moisture, thereby manufacturing a composite sheet. The dried composite sheet had a thickness of about 1.5 mm at 120 g/m². 10 composite sheets above were stacked so that the basis weight was 1200 g/m², followed by a hot press process at 170 and 5 bar to thereby form a composite preformed board having a thickness of 2 mm. The composite preformed board as manufactured above was expanded through preheating in an IR oven at 200 for 2 minutes and transported to a mold-press at room temperature, followed by mold-pressing by applying a pressure of 1 bar, and thus, a vehicle underbody cover having an average thickness of 2.5 mm was completed.

### Example 6

A composite sheet was manufactured in the same manner as in Example 5, except that the glass fiber having a silane-coated special surface used in Example 2 was used instead of the glass fiber used in Example 5. Subsequently, the composite preformed board was formed in the same manner as in Example 5, expanded through preheating in the IR oven at 200 for 2 minutes, and transported to a press at room temperature. Then, the composite preformed board was pressed to complete a vehicle underbody cover having an average thickness of 2.5 mm.

### Example 7

A composite sheet was manufactured in the same manner as in Example 6, except that 10 parts by weight of the glass fiber having a silane-coated special surface used in Example 6 and 90 parts by weight of the bicomponent polymer fiber were blended. Subsequently, the composite preformed board was formed in the same manner as in Example 6, expanded through preheating in the IR oven at 200 for 2 minutes, and transported to a press at room temperature. Then, the composite preformed board was pressed to complete a vehicle underbody cover having an average thickness of 2.5 mm.

### Example 8

A composite sheet was manufactured in the same manner as in Example 6, except that 90 parts by weight of the glass fiber having a silane-coated special surface used in Example 6 and 10 parts by weight of the bicomponent polymer fiber were blended. Subsequently, the composite preformed board was formed in the same manner as in Example 6, expanded through preheating in the IR oven at 200 for 2 minutes, and transported to a press at room temperature. Then, the composite preformed board was pressed to complete a vehicle underbody cover having an average thickness of 2.5 mm.

### Comparative Example 1

A glass fiber was prepared by cutting a glass fiber having a cross-sectional diameter of 13 µm coated to be suitable for water dispersion so that a length was 13 mm. 40 parts by weight of the above glass fiber and 60 parts by weight of polypropylene fiber having a length of 5 mm and a thickness of 4 denier (about 20 µm in a cross-sectional diameter) were blended and stirred in an aqueous solution for 1 hour, the aqueous solution having pH adjusted to 2 with hydrochloric acid. Here, a total content of the glass fiber and the polypropylene fiber was 2 g per 1L of water. The aqueous solution slurry after the stirring process was subjected to a wet-laid process to form a web through a vacuum suction device in a head box. After the web was formed, the web was passed through an oven dryer at 140 to completely dry moisture, thereby manufacturing a composite sheet. The dried composite sheet had a thickness of about 1.5 mm at 120 g/m². 10 composite sheets above were stacked so that the basis weight was 1200 g/m², followed by a hot press process at 170 and 5 bar to thereby form a composite preformed board having a thickness of 1.5 mm. The preformed board as manufactured above was expanded through preheating in an IR oven at 200 for 2 minutes, and transported to a press at room temperature, and a pressure was applied thereon. Here, the pressure to be applied was 1 bar, which is a pressure not to allow the board to come out of the mold to thereby perform mold-pressing, and thus, a vehicle underbody cover having an average thickness of 2.0 mm was completed.

### Comparative Example 2

A composite sheet was manufactured in the same manner as in Comparative Example 1, except that the glass fiber having a silane-coated special surface used in Example 2 was used instead of the glass fiber used in Comparative Example 1. Subsequently, the composite preformed board was formed in the same manner as in Comparative Example 1, expanded through preheating in the IR oven at 200 for 2 minutes, and transported to a press at room temperature. Then, the composite preformed board was pressed to complete a vehicle underbody cover having an average thickness of 2.0 mm.

### Comparative Example 3

40 parts by weight of the glass fiber and 60 parts by weight of the polypropylene fiber used in Comparative Example 1 were blended, followed by a dry needle punching process, thereby manufacturing a composite sheet so that the basis weight was 600 g/m². Subsequently, two composite sheets were stacked and molded by a hot press process at 170 and 1 bar to complete a vehicle underbody cover having an average thickness of 2.0 mm.

### Comparative Example 4

A glass fiber was prepared by cutting a glass fiber having a cross-sectional diameter of 13 µm coated to be suitable for water dispersion so that a length was 13 mm. 40 parts by weight of the above glass fiber and 60 parts by weight of polypropylene fiber having a length of 5 mm and a thickness of 4 denier (about 20 µm in a cross-sectional diameter) were blended and stirred in an aqueous solution for 1 hour, the aqueous solution having pH adjusted to 2 with hydrochloric acid. Here, a total content of the glass fiber and the polypropylene fiber was 2 g per 1L of water. The aqueous solution slurry after the stirring process was subjected to a wet-laid process to form a web through a vacuum suction device in a head box. After the web was formed, the web was passed through an oven dryer at 140 to completely dry moisture, thereby manufacturing a composite sheet. The dried composite sheet had a thickness of about 1.5 mm at 120 g/m². 10 composite sheets above were stacked so that the basis weight was 1200 g/m², followed by a hot press process at 170 and 5 bar to thereby form a composite preformed board having a thickness of 2mm. The preformed board as manufactured above was expanded through preheating in an IR oven at 200 for 2 minutes, and transported to a press at room temperature, and a pressure was applied thereon. Here, the pressure to be applied was 1 bar, which is a pressure not to allow the board to come out of the mold to thereby perform mold-pressing, and thus, a vehicle underbody cover having an average thickness of 2.5 mm was completed.

### Comparative Example 5

A composite sheet was manufactured in the same manner as in Comparative Example 4, except that the glass fiber having a silane-coated special surface used in Example 2 was used instead of the glass fiber used in Comparative Example 4. Subsequently, the composite preformed board was formed in the same manner as in Comparative Example 4, expanded through preheating in the IR oven at 200 for 2 minutes, and transported to a press at room temperature. Then, the composite preformed board was pressed to complete a vehicle underbody cover having an average thickness of 2.5 mm.

### Comparative Example 6

40 parts by weight of the glass fiber and 60 parts by weight of the polypropylene fiber used in Comparative Example 4 were blended, followed by a dry needle punching process, thereby manufacturing a composite sheet so that the basis weight was 600 g/m². Subsequently, two composite sheets were stacked and molded by a hot press process at 170 and 1 bar to complete a vehicle underbody cover having an average thickness of 2.5 mm.

### Evaluation

### Experimental Example 1

Mechanical properties of tensile strength, tensile modulus, flexural strength, and flexural modulus on the vehicle underbody covers manufactured in Examples 1-8 and Comparative Examples 1-8 were compared with each other. The tensile strength and the flexural strength were measured after allowing the vehicle underbody covers manufactured in Examples 1 to 4 and Comparative Examples 1 to 4 to stand at room temperature for 24 hours, respectively.

The tensile strength and the tensile modulus were measured according to ASTM D638 on the vehicle underbody cover samples each having a thickness of 2 mm, and the flexural strength and the flexural modulus were measured according to ASTM D790 on the vehicle underbody cover samples each having a thickness of 2.5 mm. Results thereof are shown in Tables 1 and 2.

**[Table 1]**

| Classification | Tensile strength (MPa) | Tensile modulus (GPa) |
|---|---|---|
| Example 1 | 33 | 2.5 |
| Example 2 | 56 | 3.4 |
| Example 3 | 22 | 1.5 |
| Example 4 | 43 | 2.7 |
| Comparative Example 1 | 23 | 1.7 |
| Comparative Example 2 | 38 | 3.1 |
| Comparative Example 3 | 17 | 1.2 |

**[Table 2]**

| Classification | Flexural strength (MPa) | Flexural modulus (GPa) |
|---|---|---|
| Example 5 | 23 | 1.9 |
| Example 6 | 26 | 1.6 |
| Example 7 | 15 | 1.4 |
| Example 8 | 17 | 1.5 |
| Comparative Example 4 | 17 | 0.9 |
| Comparative Example 5 | 22 | 1.5 |
| Comparative Example 6 | 17 | 0.8 |

It was confirmed that the content of the glass fiber of Example 4 was higher than that of the glass fiber of Example 2, but that the tensile strength of Example 2 was the highest. Generally, the tensile modulus is higher as the content of the glass fiber is increased due to a high tensile modulus value of the glass fiber itself, but rather, the tensile modulus of Example 2 was higher than that of Example 4. From the above description, it could be appreciated that as the content of the glass fiber was increased, the strength was improved, but at a predetermined content or more, further improvement in strength was not exhibited, and thus, the optimum content at which the maximum mechanical properties were obtained could be the content level of the glass fiber of Example 2.

### Experimental Example 2

Samples of the composite preformed boards manufactured in Example 1 and Comparative Example 1 and the sample of the vehicle underbody cover manufactured in Comparative Example 3 were prepared. The impact strength was measured at five points that were arbitrarily selected in each of the samples.

Evaluation of the impact strength was an evaluation on an impact energy absorbing ability. The composite preformed board samples (Examples 1 to 2) and the vehicle underbody cover sample (Comparative Example 3) were allowed to stand at room temperature for 24 hours, and then, subjected to a falling ball impact test. The falling ball impact test was performed at room temperature according to ASTM D3763.

Results thereof are shown in Table 3 below.

**[Table 3]**

| Measurement of impact strength [Total NTT (J/mm)] | Example 1 | Comparative Example 1 | Comparative Example 3 |
|---|---|---|---|
| Point 1 | 1.8 | 1.6 | 1.7 |
| Point 2 | 1.9 | 1.8 | 1.9 |
| Point 3 | 1.7 | 1.4 | 2.1 |
| Point 4 | 1.8 | 2.0 | 1.8 |
| Point 5 | 1.8 | 1.6 | 1.2 |
| Maximum difference = {maximum value - minimum value} | 0.2 | 0.6 | 0.9 |

In Example 1, the impact strength results for any five points were uniform, whereas in Comparative Example 1, the impact strength results for any five points were different. From the above-described results, it could be confirmed that the dispersion of the fibrous particles in Example 1 was excellent, and thus the composite preformed board had overally excellent physical properties. In Comparative Example 1, excellent impact strength was exhibited at a point where the fibrous particles were aggregated, whereas the impact strength is expected to be lowered at a point where the density of the fibrous particles is expected to be lowered.

### Experimental Example 3

The sound absorption performance properties of the vehicle underbody covers manufactured in Example 1, Comparative Example 1, and Comparative Example 3 were compared with each other.

The sound absorption performance was measured on the vehicle underbody cover samples having a thickness of 2 mm according to KS2816-2 standard. Results thereof were shown in Table 4 below.

**[Table 4]**

| Classification | Average sound absorption coefficient |
|---|---|
| Example 1 | 0.19 |
| Comparative Example 1 | 0.17 |
| Comparative Example 3 | 0.14 |

It could be confirmed that the weight ratio of the glass fiber and the polymer was the same in each sample of Example 1, Comparative Example 1, and Comparative Example 3, but the sound absorption performance of Example 1 was the most excellent.

In the case of the sound absorption performance, when the noise reaches the underbody cover from the outside, a sound absorption effect is expressed by fiber vibration and pores in the material. In Example 1, not only the glass fiber but also the core part of the bicomponent polymer fiber remain after the final forming, and thus, the sound absorption performance is able to be improved by increasing a fiber vibration effect. In addition, it could be appreciated that since the dispersibility of the glass fiber of Example 1 was higher than that of Comparative Example 3, the pores were uniformly distributed, and thus, the sound absorption performance was high.

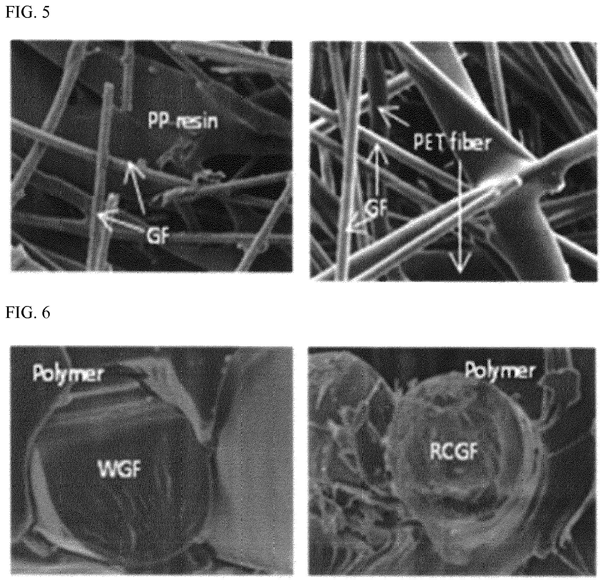

FIG. 5 is SEM images of the inner parts of the composite preformed boards of Comparative Example 1 (left image) and Example 1 (right image). It could be confirmed that in Example 1, the core part of the bicomponent polymer fiber together with the glass fiber maintained the fibrous particles, whereas in Comparative Example 1, the propylene fiber phase did not maintain the fibrous form. It was confirmed that in Example 1, the core part of the bicomponent polymer fiber maintained the fibrous phase, and thus, even after thermoforming, the content of fibrous particles in the material was higher than that in Comparative Example 1.

FIG. 6 is SEM images showing enlarged cross-sections of the glass fibers on the fracture surfaces (after tensile experiment) of the composite preformed boards of Example 1 (left image) and Example 2 (right image).

In Example 2, the glass fiber that was surface-treated with the silane-based compound was used to improve chemical affinity with the polyester resin for improvement of the bonding strength, and as shown in FIG. 4, it was confirmed that the chemical bonding strength between the glass fiber and the polymer was improved after forming. It could be confirmed that in Example 2, the resin (resin material of the sheath part of the bicomponent polymer fiber) was stuck to the surface of the reinforcing fiber (glass fiber) in an unclean way after the fracture as compared to Example 1, which is because the reinforcing fiber (glass fiber) was chemically bonded with the resin. As described above, when the reinforcing fiber and the resin are chemically bonded, it is possible to minimize a defect caused by leaving (detaching) the reinforcing fiber from the resin at the time of fracture. As a result, it is possible to improve the tensile strength as compared to Example 1. While this invention has been described in connection with what is presently considered to be practical exemplary embodiments, it is to be understood that the invention is not limited to the disclosed embodiments, but, on the contrary, is intended to cover various modifications included within the scope of the appended claims.

### [Detailed Description of Main Elements]

1: First fibrous particle
2: Second fibrous particle
3: Binding material
4: Reinforcing fiber
5: Bicomponent polymer
5a: Core part
5b: Sheath part
10: Central layer
20: Porous fiber-reinforced composite
30, 40: Coating layer
50: Adhesive layer
100: Vehicle underbody cover

## Claims

1. A vehicle underbody cover (100) comprising:
a central layer (10); and coating layers (30, 40) arranged on both surfaces of the central layer (10),
wherein the central layer (10) includes: a first fibrous particle; a second fibrous particle; and a binding material for binding the first fibrous particle and the second fibrous particle,
**characterised in that**,
the first fibrous particle and the second fibrous particle are bound by the binding material so as to form an irregular network structure including pores,
the first fibrous particle is an inorganic fiber or an organic fiber,
the second fibrous particle includes a first thermoplastic resin,
the binding material includes a second thermoplastic resin,
a melting point of the first thermoplastic resin is higher than a melting point of the second thermoplastic resin;
wherein in the central layer (10), a weight ratio of a content of the first fibrous particle to the sum of contents of the second fibrous particle and the binding material is from 20 : 80 to 60 : 40; and
wherein the first thermoplastic resin has a specific gravity of more than 1.

2. The vehicle underbody cover (100) of claim 1, wherein the first fibrous particle includes at least one selected from the group consisting of glass fibers, aramid fibers, carbon fibers, carbon nanotubes, boron fibers, metal fibers, and a combination thereof.

3. The vehicle underbody cover (100) of claim 1, wherein the first thermoplastic resin has a melting point of 160°C or more.

4. The vehicle underbody cover (100) of claim 1, wherein the second thermoplastic resin has a melting point less than 200°C.

5. The vehicle underbody cover (100) of claim 1, wherein the central layer (10) has a porosity of 30 to 80% by volume.

6. The vehicle underbody cover (100) of claim 1, wherein the central layer (10) has a density of 0.1 g/cm³ to 1.6 g/cm³, wherein the central layer (10) has a basis weight of 600 g/m² to 3000 g/m².

7. The vehicle underbody cover (100) of claim 1, wherein the coating layer includes at least one selected from the group consisting of a non-woven fabric, a heat insulating skin material, a perforated sheet, and a combination thereof.

8. A method for manufacturing a vehicle underbody cover (100) comprising:
dispersing a reinforcing fiber and a bicomponent polymer fiber in an acidic aqueous solution to prepare a slurry solution;
forming a web from the slurry solution by a wet-laid process; and
heat treating and drying the formed web to manufacture a composite sheet;
stacking at least two of the composite sheets, followed by press-forming to manufacture a composite preformed board (10);
stacking coating layers (30, 40) on both surfaces of the composite preformed board (10);
heating and expanding the composite preformed board (10) on which the coating layers (30, 40) are stacked on both surfaces; and
mold-pressing the expanded composite preformed board (10) on which the coating layers (30, 40) are stacked on both surfaces to manufacture a molded vehicle underbody cover (100);
wherein the reinforcing fiber is an inorganic fiber or an organic fiber,
**characterised in that**,
the bicomponent polymer fiber includes a core part and a sheath part,
the core part includes a first thermoplastic resin, and the sheath part includes a second thermoplastic resin, and
a melting point of the first thermoplastic resin is higher than that of the second thermoplastic resin;
wherein a weight ratio of the reinforcing fiber and the bicomponent fiber is from 20: 80 to 60 : 40; and
wherein a specific gravity of the core part of the bicomponent polymer fiber is more than 1.

9. The method of claim 8, wherein the reinforcing fiber and the bicomponent polymer fiber are mixed so that a total content of the reinforcing fiber and the bicomponent polymer fiber is 0.1 g to 10 g per 1L of the acidic aqueous solution.

10. The method of claim 8, wherein the heat treating and drying of the formed web is performed at 100 to 180°C.

11. The method of claim 8, wherein the press-forming is performed by applying a pressure of 1 to 30 bar at a temperature of 100 to 180°C to heat-press forming the composite sheet, thereby manufacturing the composite preformed board.

12. The method of claim 8, wherein the composite preformed board in which the coating layers are stacked on both surfaces is heated to a temperature of 140 to 240°C to be expanded.

13. The method of claim 8, wherein the composite preformed board in which the coating layers are stacked on both surfaces is heated to be expanded to 200 to 600% by volume relative to initial volume, wherein the mold-pressing is performed by applying a pressure of 1 bar to 100 bar at a temperature of 5 to 100°C on the expanded composite preformed board on which the coating layers are stacked on both surfaces.

## Patentansprüche

1. Fahrzeugunterbodenabdeckung (100), die Folgendes umfasst:
eine Mittelschicht (10); und Beschichtungsschichten (30, 40), die auf beiden Oberflächen der Mittelschicht (10) angeordnet sind,
wobei die Mittelschicht (10) Folgendes einschließt: ein erstes Faserpartikel; ein zweites Faserpartikel; und ein Bindematerial zum Binden des ersten Faserpartikels und des zweiten Faserpartikels,
**dadurch gekennzeichnet, dass**
das erste Faserpartikel und das zweite Faserartikel durch das Bindematerial gebunden sind, um eine unregelmäßige Netzwerkstruktur einschließlich Poren auszubilden,
das erste Faserpartikel eine anorganische Faser oder eine organische Faser ist,
das zweite Faserpartikel ein erstes thermoplastisches Harz einschließt,
das Bindematerial ein zweites thermoplastisches Harz einschließt,
ein Schmelzpunkt des ersten thermoplastischen Harzes höher als ein Schmelzpunkt des zweiten thermoplastischen Harzes ist;
wobei in der Mittelschicht (10) ein Gewichtsverhältnis eines Gehalts des ersten Faserpartikels zu der Summe des Gehalts des zweiten Faserpartikels und des Bindematerials von 20 : 80 bis 60 : 40 beträgt; und
wobei das erste thermoplastische Harz eine spezifische Gravitation von mehr als 1 aufweist.

2. Fahrzeugunterbodenabdeckung (100) nach Anspruch 1, wobei das erste Faserpartikel wenigstens eines einschließt, das aus der Gruppe ausgewählt ist, die aus Glasfasern, Aramidfasern, Kohlenstofffasern, Kohlenstoffnanoröhren, Borfasern, Metallfasern und einer Kombination davon besteht.

3. Fahrzeugunterbodenabdeckung (100) nach Anspruch 1, wobei das erste thermoplastische Harz einen Schmelzpunkt von 160 °C oder mehr aufweist.

4. Fahrzeugunterbodenabdeckung (100) nach Anspruch 1, wobei das zweite thermoplastische Harz einen Schmelzpunkt von weniger als 200 °C aufweist.

5. Fahrzeugunterbodenabdeckung (100) nach Anspruch 1, wobei die Mittelschicht (10) eine Porosität von 30 bis 80 Vol.-% aufweist.

6. Fahrzeugunterbodenabdeckung (100) nach Anspruch 1, wobei die Mittelschicht (10) eine Dichte von 0,1 g/cm³ bis 1,6 g/cm³ aufweist, wobei die Mittelschicht (10) ein Flächengewicht von 600 g/m² bis 3000 g/m² aufweist.

7. Fahrzeugunterbodenabdeckung (100) nach Anspruch 1, wobei die Beschichtungsschicht wenigstens eines einschließt, das aus der Gruppe ausgewählt ist, die aus einem Vliesstoff, einem wärmeisolierenden Überzugsmaterial, einer perforierten Lage und einer Kombination davon besteht.

8. Verfahren zum Herstellen einer Fahrzeugunterbodenabdeckung (100), das Folgendes umfasst:
Dispergieren einer Verstärkungsfaser und einer Bikomponentenpolymerfaser in einer sauren wässrigen Lösung, um eine Aufschlämmungslösung zu fertigen;
Ausbilden einer Bahn aus der Aufschlämmungslösung durch einen Nasslegevorgang; und
Wärmebehandeln und Trocknen der ausgebildeten Bahn, um eine Verbundlage herzustellen;
Stapeln von wenigstens zwei der Verbundlagen, gefolgt von Pressformen, um eine vorgeformte Verbundplatte (10) herzustellen;
Stapeln von Beschichtungsschichten (30, 40) auf beiden Oberflächen der vorgeformten Verbundplatte (10);
Erwärmen und Ausdehnen der vorgeformten Verbundplatte (10), auf der die Beschichtungsschichten (30, 40) auf beiden Oberflächen gestapelt sind; und
Formenpressen der ausgedehnten vorgeformten Verbundplatte (10), auf der die Beschichtungsschichten (30, 40) auf beiden Oberflächen gestapelt sind, um eine geformte Fahrzeugunterbodenabdeckung (100) herzustellen;
wobei die Verstärkungsfaser eine anorganische Faser oder eine organische Faser ist,
**dadurch gekennzeichnet, dass**
die Bikomponentenpolymerfaser einen Kernteil und einen Mantelteil einschließt,
der Kernteil ein erstes thermoplastisches Harz einschließt und der Mantelteil ein zweites thermoplastisches Harz einschließt, und
ein Schmelzpunkt des ersten thermoplastischen Harzes höher als der des zweiten thermoplastischen Harzes ist;
wobei ein Gewichtsverhältnis der Verstärkungsfaser und der Bikomponentenfaser von 20 : 80 bis 60 : 40 beträgt; und
wobei eine spezifische Gravitation des Kernteils der Bikomponentenpolymerfaser mehr als 1 beträgt.

9. Verfahren nach Anspruch 8, wobei die Verstärkungsfaser und die Bikomponentenpolymerfaser gemischt werden, sodass ein Gesamtgehalt der Verstärkungsfaser und der Bikomponentenpolymerfaser 0,1 g bis 10 g pro 1 L der sauren wässrigen Lösung beträgt.

10. Verfahren nach Anspruch 8, wobei das Wärmebehandeln und das Trocknen der ausgebildeten Bahn bei 100 bis 180 °C durchgeführt wird.

11. Verfahren nach Anspruch 8, wobei das Pressformen durch Anwenden eines Drucks von 1 bis 30 bar bei einer Temperatur von 100 bis 180 °C durchgeführt wird, um die Verbundfolie durch Heißpressen auszubilden, wobei dadurch die vorgeformte Verbundplatte hergestellt wird.

12. Verfahren nach Anspruch 8, wobei die vorgeformte Verbundplatte, bei der die Beschichtungsschichten auf beiden Oberflächen gestapelt sind, auf eine Temperatur von 140 bis 240 °C erwärmt wird, um ausgedehnt zu werden.

13. Verfahren nach Anspruch 8, wobei die vorgeformte Verbundplatte, auf der die Beschichtungsschichten auf beiden Oberflächen gestapelt sind, erwärmt wird, um auf 200 bis 600 Vol.-% relativ zu einem Anfangsvolumen ausgedehnt zu werden, wobei das Formpressen durch Anwenden eines Drucks von 1 bar bis 100 bar bei einer Temperatur von 5 bis 100 °C auf die expandierte vorgeformte Verbundlatte durchgeführt wird, auf der die Beschichtungsschichten auf beiden Oberflächen gestapelt sind.

## Revendications

1. Revêtement de dessous de caisse de véhicule (100) comprenant :
une couche centrale (10) ; et des couches d'enrobement (30, 40) disposées sur les deux surfaces de la couche centrale (10),
la couche centrale (10) comportant : une première particule fibreuse ; une seconde particule fibreuse ; et un matériau de liaison permettant la liaison de la première particule fibreuse et de la seconde particule fibreuse,
**caractérisé en ce que**,
la première particule fibreuse et la seconde particule fibreuse sont liées par le matériau de liaison de manière à former une structure de réseau irrégulière comportant des pores,
la première particule fibreuse est une fibre inorganique ou une fibre organique,
la seconde particule fibreuse comporte une première résine thermoplastique,
le matériau de liaison comporte une seconde résine thermoplastique,
un point de fusion de la première résine thermoplastique est supérieur à un point de fusion de la seconde résine thermoplastique ;
dans la couche centrale (10), un rapport en poids d'une teneur de la première particule fibreuse à la somme des teneurs de la seconde particule fibreuse et du matériau liant étant de 20:80 à 60:40 ; et
la première résine thermoplastique ayant une pesanteur spécifique supérieure à 1.

2. Revêtement de dessous de caisse de véhicule (100) selon la revendication 1, la première particule fibreuse comportant au moins une particule fibreuse choisie dans le groupe constitué de fibres de verre, de fibres aramide, de fibres de carbone, de nanotubes de carbone, de fibres de bore, de fibres métalliques et de leur combinaison.

3. Revêtement de dessous de caisse de véhicule (100) selon la revendication 1, la première résine thermoplastique ayant un point de fusion égal ou supérieur à 160 °C.

4. Revêtement de dessous de caisse de véhicule (100) selon la revendication 1, la seconde résine thermoplastique ayant un point de fusion inférieur à 200 °C.

5. Revêtement de dessous de caisse de véhicule (100) selon la revendication 1, la couche centrale (10) ayant une porosité de 30 à 80 % en volume.

6. Revêtement de dessous de caisse de véhicule (100) selon la revendication 1, la couche centrale (10) ayant une densité de 0,1 g/cm³ à 1,6 g/cm³, la couche centrale (10) ayant un poids de base de 600 g/m² à 3 000 g/m².

7. Revêtement de dessous de caisse de véhicule (100) selon la revendication 1, la couche d'enrobement comportant au moins une couche d'enrobement choisie dans le groupe constitué d'un tissu non tissé, d'un matériau de peau isolant contre la chaleur, d'une feuille perforée et de leur combinaison.

8. Procédé de fabrication d'un revêtement de dessous de caisse de véhicule (100) comprenant :
la dispersion d'une fibre de renforcement et d'une fibre polymère bicomposée dans une solution aqueuse acide pour préparer une solution en pâte ;
la formation d'une bande à partir de la solution en pâte par un procédé par voie humide ; et
le traitement thermique et le séchage de la bande formée pour fabriquer une feuille composite ;
l'empilement d'au moins deux des feuilles composites, suivi d'un formage à la presse pour fabriquer un panneau composite préformé (10) ;
l'empilement des couches d'enrobement (30, 40) sur les deux surfaces du panneau composite préformé (10) ;
le chauffage et la dilatation du panneau composite préformé (10) sur lequel les couches d'enrobement (30, 40) sont empilées sur les deux surfaces ; et
le pressage au moule du panneau préformé composite dilaté (10) sur lequel les couches d'enrobement (30, 40) sont empilées sur les deux surfaces pour fabriquer un revêtement de dessous de caisse de véhicule moulé (100) ;
la fibre de renforcement étant une fibre inorganique ou une fibre organique,
**caractérisé en ce que**,
la fibre polymère bicomposée comporte une partie noyau et une partie gaine,
la partie noyau comporte une première résine thermoplastique, et la partie gaine comporte une seconde résine thermoplastique, et
un point de fusion de la première résine thermoplastique est supérieur à celui de la seconde résine thermoplastique ;
un rapport en poids de la fibre de renforcement et de la fibre bicomposée étant de 20:80 à 60:40 ; et
une pesanteur spécifique de la partie noyau de la fibre polymère bicomposée étant supérieure à 1.

9. Procédé selon la revendication 8, la fibre de renforcement et la fibre polymère bicomposée étant mélangées de sorte qu'une teneur totale de la fibre de renforcement et de la fibre polymère bicomposée est de 0,1 g à 10 g pour 1 litre de solution aqueuse acide.

10. Procédé selon la revendication 8, le traitement thermique et le séchage de la bande formée étant effectués entre 100 et 180 °C.

11. Procédé selon la revendication 8, le formage à la presse étant effectué en appliquant une pression de 1 à 30 bars à une température de 100 à 180°C pour former par pressage à chaud la feuille composite, fabriquant ainsi le panneau composite préformé.

12. Procédé selon la revendication 8, le panneau composite préformé dans lequel les couches d'enrobement sont empilées sur les deux surfaces étant chauffé à une température de 140 à 240 °C pour être dilaté.

13. Procédé selon la revendication 8, le panneau composite préformé dans lequel les couches d'enrobement sont empilées sur les deux surfaces étant chauffé pour être dilaté de 200 à 600 % en volume par rapport au volume initial, le pressage au moule étant effectué en appliquant une pression de 1 bar à 100 bar à une température de 5 à 100 °C sur le panneau composite préformé dilaté sur lequel les couches d'enrobement sont empilées sur les deux surfaces.
